(19) Europäisches Patentamt / European Patent Office / Office européen des brevets

(11) **EP 4 703 240 A1**

(12) **EUROPEAN PATENT APPLICATION**
published in accordance with Art. 153(4) EPC

(43) Date of publication:
04.03.2026 Bulletin 2026/10

(21) Application number: 23935403.8

(22) Date of filing: 28.04.2023

(51) International Patent Classification (IPC):
*B62D 6/00* (2006.01)

(52) Cooperative Patent Classification (CPC):
**B62D 15/025; B62D 5/0463;** B62D 5/046

(86) International application number:
**PCT/JP2023/016937**

(87) International publication number:
**WO 2024/224627 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **JTEKT CORPORATION**
**Kariya-shi, Aichi 448-8652 (JP)**

(72) Inventors:
• **SHOJI, Naoki**
  **Kariya-shi, Aichi 448-8652 (JP)**
• **ITAMOTO, Hidenori**
  **Kariya-shi, Aichi 448-8652 (JP)**

• **TAMAIZUMI, Terutaka**
  **Kariya-shi, Aichi 448-8652 (JP)**
• **TAMAKI, Hiromasa**
  **Kariya-shi, Aichi 448-8652 (JP)**
• **ZHOU, Xin**
  **Kariya-shi, Aichi 448-8652 (JP)**
• **OMURA, Kazuki**
  **Kariya-shi, Aichi 448-8652 (JP)**
• **YASUI, Daiki**
  **Toyota-shi, Aichi 471-8571 (JP)**

(74) Representative: **Winter, Brandl - Partnerschaft
mbB
Alois-Steinecker-Straße 22
85354 Freising (DE)**

(54) **MOTOR CONTROL DEVICE**

(57) A motor control device includes: a manual steering command value generation unit that generates a manual steering command value using steering torque and a first assist torque command value; an integrated angle command value calculation unit that calculates an integrated angle command value by adding the manual steering command value to an automatic steering command value; an angle control unit that calculates a first integrated torque command value according to the integrated angle command value; a subtraction unit that calculates a second integrated torque command value by subtracting a second assist torque command value from the first integrated torque command value; a guard processing unit that calculates a third integrated torque command value by performing a guard process on the second integrated torque command value; an addition unit that calculates a fourth integrated torque command value by adding the second assist torque command value to the third integrated torque command value; and a control unit that controls the electric motor based on the fourth integrated torque command value or the second assist torque command value.

FIG. 2

EP 4 703 240 A1

**Description**

TECHNICAL FIELD

The present disclosure relates to a control device for an electric motor for steering angle control.

BACKGROUND ART

Patent Document 1 discloses a motor control device including: an assist torque command value generation unit that generates an assist torque command value using steering torque; a manual steering command value generation unit that generates a manual steering command value using the steering torque and the assist torque command value; an integrated angle command value calculation unit that calculates an integrated angle command value by adding the manual steering command value to an automatic steering command value; and a switching unit that switches, based on a switching signal, first control for controlling an electric motor based only on the assist torque command value and second control for controlling the electric motor based on the integrated angle command value.

Related Art Documents

Patent Documents

Patent Document 1: WO 2023/286169

SUMMARY OF THE INVENTION

Problem to be Solved by the Invention

In the second control described in Patent Document 1, angle control is performed on the integrated angle command value to calculate a torque command value. Therefore, in the second control described in Patent Document 1, the manual steering command value according to the driver's operation is also provided to an angle control unit together with the automatic steering command value. For this reason, when a guard process is performed to set an upper limit on the absolute value of the torque command value obtained by the angle control unit or the absolute value of the amount of change in the torque command value, the driver's steering is restricted. This may cause the driver to feel sticking in the steering torque.

An object of the present disclosure is to provide a motor control device that does not restrict the driver's steering even when a guard process is performed on a torque command value obtained by an angle control unit.

Means for Solving the Problem

One embodiment of the present disclosure provides a motor control device that controls drive of an electric motor for steering angle control. The motor control device includes: a first assist torque command value setting unit that sets a first assist torque command value using steering torque; a manual steering command value generation unit that generates a manual steering command value using the steering torque and the first assist torque command value; an integrated angle command value calculation unit that calculates an integrated angle command value by adding the manual steering command value to an automatic steering command value; a second assist torque command value setting unit that sets a second assist torque command value using the steering torque; an angle control unit that calculates a first integrated torque command value according to the integrated angle command value; a subtraction unit that calculates a second integrated torque command value by subtracting the second assist torque command value from the first integrated torque command value; a guard processing unit that calculates a third integrated torque command value by performing a guard process on the second integrated torque command value; an addition unit that calculates a fourth integrated torque command value by adding the second assist torque command value to the third integrated torque command value; and a control unit that controls the electric motor based on the fourth integrated torque command value or the second assist torque command value.

In this configuration, the driver's steering is not restricted even when the guard process is performed on the torque command value obtained by the angle control unit.

One embodiment of the present disclosure provides a motor control device that controls drive of an electric motor for steering angle control. The motor control device includes: a first assist torque command value setting unit that sets a first assist torque command value using steering torque; a manual steering command value generation unit that generates a manual steering command value using the steering torque and the first assist torque command value; an integrated angle command value calculation unit that calculates an integrated angle command value by adding the manual steering command value to an automatic steering command value; an angle control unit that calculates a first integrated torque command value according to the integrated angle command value; a subtraction unit that calculates a fifth integrated torque command value by subtracting the first assist torque command value from the first integrated torque command value; a guard processing unit that calculates a sixth integrated torque command value by performing a guard process on the fifth integrated torque command value; an addition unit that calculates a seventh integrated torque command value by adding the first assist torque command value to the sixth integrated torque command value; and a control unit that controls the electric motor based on the seventh integrated torque command value.

In this configuration, the driver's steering is not restricted even when the guard process is performed on the torque command value obtained by the angle control unit.

The above and other objects, features, and effects of the present disclosure will become apparent from the following description of an embodiment that will be given with reference to the accompanying drawings.

BRIEF DESCRIPTION OF THE DRAWINGS

[FIG. 1] FIG. 1 is a schematic diagram showing a schematic configuration of an electric power steering system to which a motor control device according to an embodiment of the present disclosure is applied.
[FIG. 2] FIG. 2 is a block diagram illustrating an electrical configuration of a motor control ECU.
[FIG. 3] FIG. 3 is a graph showing an example of setting a second assist torque command value $T_{as2}$ with respect to steering torque $T_{tb}$.
[FIG. 4] FIG. 4 is a graph showing an example of setting a first assist torque command value $T_{as1}$ with respect to the steering torque $T_{tb}$.
[FIG. 5] FIG. 5 is a schematic diagram showing an example of a reference EPS model that is used in a manual steering command value generation unit.
[FIG. 6] FIG. 6 is a block diagram showing the configuration of an angle control unit.
[FIG. 7] FIG. 7 is a schematic diagram showing an example of the configuration of a physical model of the electric power steering system.
[FIG. 8] FIG. 8 is a block diagram showing the configuration of a disturbance torque estimation unit.
[FIG. 9] FIG. 9 is a schematic diagram showing the configuration of a torque control unit.
[FIG. 10] FIG. 10 is a schematic diagram showing an example in which a higher-level ECU switches steering modes according to the traveling state of a vehicle.
[FIG. 11] FIG. 11 is a block diagram illustrating a modification of the motor control ECU.

MODES FOR CARRYING OUT THE INVENTION

[Description of Embodiment of Disclosure]

One embodiment of the present disclosure provides a motor control device that controls drive of an electric motor for steering angle control. The motor control device includes: a first assist torque command value setting unit that sets a first assist torque command value using steering torque; a manual steering command value generation unit that generates a manual steering command value using the steering torque and the first assist torque command value; an integrated angle command value calculation unit that calculates an integrated angle command value by adding the manual steering command value to an automatic steering command value; a second assist torque command value setting unit that sets a second assist torque command value using the steering torque; an angle control unit that calculates a first integrated torque command value according to the integrated angle command value; a subtraction unit that calculates a second integrated torque command value by subtracting the second assist torque command value from the first integrated torque command value; a guard processing unit that calculates a third integrated torque command value by performing a guard process on the second integrated torque command value; an addition unit that calculates a fourth integrated torque command value by adding the second assist torque command value to the third integrated torque command value; and a control unit that controls the electric motor based on the fourth integrated torque command value or the second assist torque command value.

In this configuration, the driver's steering is not restricted even when the guard process is performed on the torque command value obtained by the angle control unit.

One embodiment of the present disclosure provides a motor control device that controls drive of an electric motor for steering angle control. The motor control device includes: a first assist torque command value setting unit that sets a first assist torque command value using steering torque; a manual steering command value generation unit that generates a manual steering command value using the steering torque and the first assist torque command value; an integrated angle command value calculation unit that calculates an integrated angle command value by adding the manual steering command value to an automatic steering command value; an angle control unit that calculates a first integrated torque command value according to the integrated angle command value; a subtraction unit that calculates a fifth integrated torque command value by subtracting the first assist torque command value from the first integrated torque command value; a guard processing unit that calculates a sixth integrated torque command value by performing a guard process on the fifth integrated torque command value; an addition unit that calculates a seventh integrated torque command value by adding the first assist torque command value to the sixth integrated torque command value; and a control unit that controls the electric motor based on the seventh integrated torque command value.

In this configuration, the driver's steering is not restricted even when the guard process is performed on the torque command value obtained by the angle control unit.

In one embodiment of the present disclosure, the motor control device further includes a second assist torque command value setting unit that sets a second assist torque command value using the steering torque. The control unit is configured to control the electric motor based on the seventh integrated torque command value or the second assist torque command value.

In one embodiment of the present disclosure, a characteristic of the first assist torque command value with respect to the steering torque is different from a characteristic of the second assist torque command value with respect to the steering torque.

In one embodiment of the present disclosure, a characteristic of the first assist torque command value with respect to the steering torque is the same as a characteristic of the second assist torque command value with respect to the steering torque.

In one embodiment of the present disclosure, the second assist torque command value setting unit also functions as the first assist torque command value setting unit.

In one embodiment of the present disclosure, the guard processing unit performs a process of limiting a torque command value to be subjected to the guard process such that an absolute value of the torque command value is equal to or smaller than a first predetermined value, and/or a process of limiting the torque command value to be subjected to the guard process such that an absolute value of an amount of temporal change in the torque command value is equal to or smaller than a second predetermined value.

[Detailed Description of Embodiment of Disclosure]

An embodiment of the present disclosure will be described in detail below with reference to the accompanying drawings.

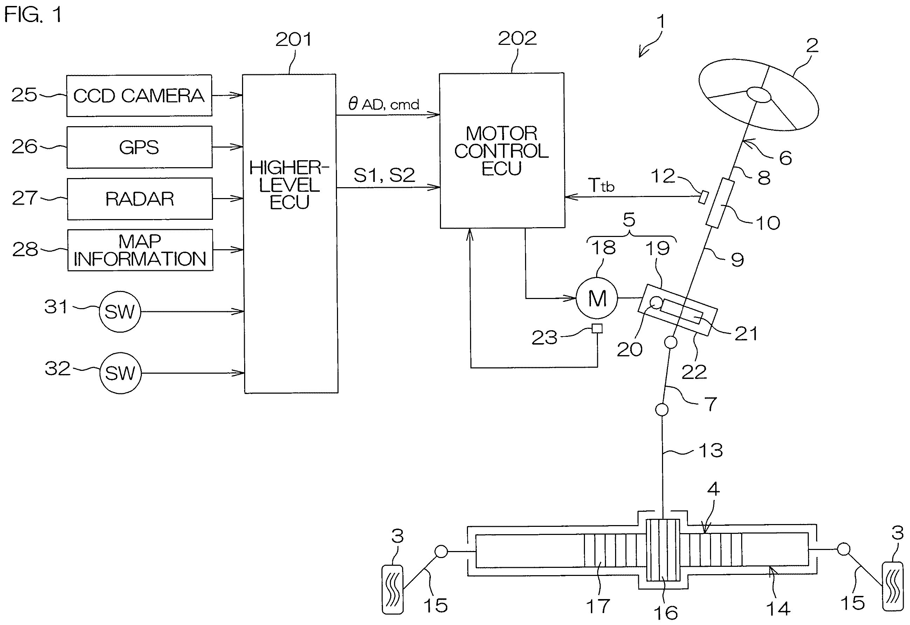

FIG. 1 is a schematic diagram showing a schematic configuration of an electric power steering system to which a motor control device according to an embodiment of the present disclosure is applied.

An electric power steering system 1 includes: a steering wheel 2 that is a steering member for steering a vehicle; a steering operation mechanism 4 that steers steered wheels 3 in conjunction with rotation of the steering wheel 2; and a steering assist mechanism 5 that assists a driver in steering. The steering wheel 2 and the steering operation mechanism 4 are mechanically connected via a steering shaft 6 and an intermediate shaft 7.

The steering shaft 6 includes an input shaft 8 connected to the steering wheel 2 and an output shaft 9 connected to the intermediate shaft 7. The input shaft 8 and the output shaft 9 are connected via a torsion bar 10 to be rotatable relative to each other.

A torque sensor 12 is disposed near the torsion bar 10. The torque sensor 12 detects steering torque (torsion bar torque) $T_{tb}$ applied to the steering wheel 2 based on the amount of relative rotational displacement between the input shaft 8 and the output shaft 9. In the present embodiment, for example, the steering torque $T_{tb}$ that is detected by the torque sensor 12 is such that the torque for steering to the left is detected as a positive value and the torque for steering to the right is detected as a negative value. As the absolute value of the steering torque $T_{tb}$ increases, the magnitude thereof increases.

The steering operation mechanism 4 is a rack and pinion mechanism including a pinion shaft 13 and a rack shaft 14 that is a steered shaft. The steered wheels 3 are connected to the ends of the rack shaft 14 via tie rods 15 and knuckle arms (not shown). The pinion shaft 13 is connected to the intermediate shaft 7. The pinion shaft 13 is configured to rotate in conjunction with steering of the steering wheel 2. A pinion 16 is connected to a distal end of the pinion shaft 13.

The rack shaft 14 extends linearly along a right-left direction of the vehicle. A rack 17 that meshes with the pinion 16 is formed on an intermediate portion of the rack shaft 14 in an axial direction. The pinion 16 and the rack 17 convert rotation of the pinion shaft 13 into axial movement of the rack shaft 14. The steered wheels 3 can be steered by moving the rack shaft 14 in the axial direction.

When the steering wheel 2 is steered (rotated), this rotation is transmitted to the pinion shaft 13 via the steering shaft 6 and the intermediate shaft 7. The pinion 16 and the rack 17 then convert rotation of the pinion shaft 13 into axial movement of the rack shaft 14. The steered wheels 3 are thus steered.

The steering assist mechanism 5 includes an electric motor 18 that generates a steering assist force (assist torque), and a speed reducer 19 that amplifies output torque of the electric motor 18 and transmits the amplified torque to the steering operation mechanism 4. The speed reducer 19 is a worm gear mechanism including a worm gear 20 and a worm wheel 21 that meshes with the worm gear 20. The speed reducer 19 is housed in a gear housing 22 that is a transmission mechanism housing.

Hereinafter, the reduction ratio (gear ratio) of the speed reducer 19 is sometimes represented by N. The reduction ratio N is defined as a ratio ($\theta_{wg}/\theta_{ww}$) of a worm gear angle $\theta_{wg}$ that is the rotational angle of the worm gear 20 to a worm wheel angle $\theta_{ww}$ that is the rotational angle of the worm wheel 21.

The worm gear 20 is rotationally driven by the electric motor 18. The worm wheel 21 is connected to the output shaft 9 to be rotatable together.

When the worm gear 20 is rotationally driven by the electric motor 18, the worm wheel 21 is rotationally driven such that motor torque is applied to the steering shaft 6 and the steering shaft 6 (output shaft 9) is rotated. The rotation of the steering shaft 6 is then transmitted to the pinion shaft 13 via the intermediate shaft 7. Rotation of the pinion shaft 13 is converted into axial movement of the rack shaft 14. The steered wheels 3 are thus steered. That is, rotationally driving the worm gear 20 using the electric motor 18 enables steering assist by the electric motor 18 and steering of the steered wheels 3. The electric motor 18 is provided with a rotational angle sensor 23 for detecting the rotational angle of a rotor of the electric motor 18.

The torque that is applied to the output shaft 9 (example of an object to be driven by the electric motor 18) includes motor torque from the electric motor 18 and disturbance torque $T_{lc}$ other than the motor torque. The disturbance torque $T_{lc}$ other than the motor torque includes steering torque $T_{tb}$, road reaction torque (road load torque) $T_{rl}$, and friction torque $T_f$.

The steering torque $T_{tb}$ is torque that is applied from the steering wheel 2 side to the output shaft 9 due to a force that is applied to the steering wheel 2 by the driver, a force that is generated by steering inertia, etc.

The road reaction torque $T_{rl}$ is torque that is applied from the steered wheel 3 side to the output shaft 9 via the rack shaft 14 due to self-aligning torque that is exerted on tires, a force that is generated by a suspension and tire wheel alignment, a friction force of the rack and pinion mechanism, etc.

The vehicle is equipped with a CCD (Charge Coupled Device) camera 25 that captures an image of the road ahead of the vehicle in the advancing direction, a GPS (Global Positioning System) 26 that detects the position of the vehicle, a radar 27 that detects a road shape and obstacles, and a map information memory 28 that stores map information. The vehicle is further equipped with two mode switches 31, 32 for manually switching steering modes.

As described later, the steering modes include a manual steering mode in which steering is performed by manual driving, and a cooperative steering mode in which steering can be performed based on both manual driving and autonomous driving.

The CCD camera 25, the GPS 26, the radar 27, and the map information memory 28 are connected to a higher-level ECU (ECU: Electronic Control Unit) 201 that performs driving assistance control and autonomous driving control. The higher-level ECU 201 performs surrounding environment recognition, vehicle position estimation, route planning, etc. based on information obtained by the CCD camera 25, the GPS 26, and the radar 27, and the map information, and determines control target values for steering and drive actuators.

In the present embodiment, the higher-level ECU 201 sets an automatic steering command value $\theta_{AD,cmd}$ for automatic steering. In the present embodiment, automatic steering control is control for causing the vehicle to travel, for example, along a target trajectory. The automatic steering command value $\theta_{AD,cmd}$ is a target value of the steering angle for autonomously driving the vehicle along a target trajectory. A process of setting such an automatic steering command value $\theta_{AD,cmd}$ is well known, and therefore will not be described in detail herein. The automatic steering control (driving assistance control) may be, for example, lane keeping assist (LKA) control for keeping the vehicle within its lane.

The higher-level ECU 201 generates mode setting signals S1, S2 according to operations on the mode switches 31, 32. Specifically, when the first mode switch 31 is turned ON by the driver, the higher-level ECU 201 outputs a manual steering mode setting signal S1 for setting the steering mode to the manual steering mode. When the second mode switch 32 is turned ON by the driver, the higher-level ECU 201 outputs a cooperative steering mode setting signal S2 for setting the steering mode to the cooperative steering mode.

The automatic steering command value $\theta_{AD,cmd}$ and the mode setting signals S1, S2 that are set by the higher-level ECU 201 are provided to a motor control ECU 202 via an in-vehicle network. The steering torque $T_{tb}$ detected by the torque sensor 12 and an output signal from the rotational angle sensor 23 are input to the motor control ECU 202. The motor control ECU 202 controls the electric motor 18 based on these input signals and information provided from the higher-level ECU 201.

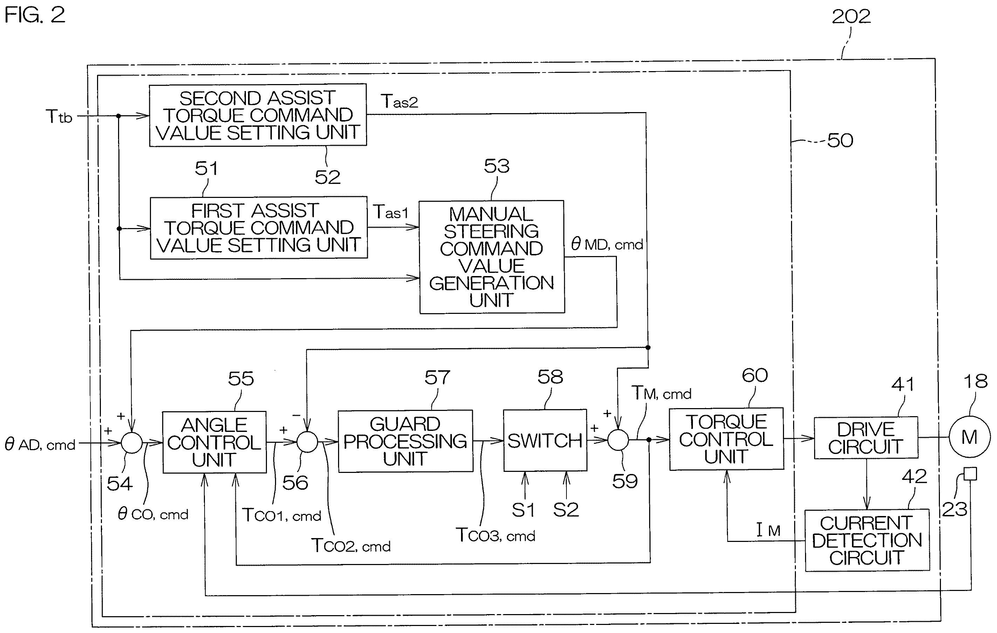

FIG. 2 is a block diagram illustrating an electrical configuration of the motor control ECU 202.

The motor control ECU 202 includes a microcomputer 50, a drive circuit (inverter circuit) 41 that is controlled by the microcomputer 50 and supplies electric power to the electric motor 18, and a current detection circuit 42 that detects a current (hereinafter referred to as "motor current $I_M$") that flows through the electric motor 18.

The microcomputer 50 includes a CPU and a memory (such as a ROM, a RAM, and a non-volatile memory), and functions as a plurality of functional processing units by executing a predetermined program. The plurality of functional processing units includes a first assist torque command value setting unit 51, a second assist torque command value setting unit 52, a manual steering command value generation unit 53, an integrated angle command value calculation unit 54, an angle control unit 55, a subtraction unit 56, a guard processing unit 57, a switch 58, an addition unit 59, and a torque control unit (current control unit) 60.

The second assist torque command value setting unit 52 sets a second assist torque command value $T_{as2}$ for normal assist control. Specifically, when the steering mode is the manual steering mode, the second assist torque command value setting unit 52 sets the second assist torque command value $T_{as2}$ that is a target value of the assist torque required for manual operation.

The first assist torque command value setting unit 51 sets a first assist torque command value $T_{as1}$ for cooperative assist control. Specifically, when the steering mode is the cooperative steering mode, the first assist torque command value setting unit 51 sets the first assist torque command value $T_{as1}$ that is a target value of the assist torque required for manual operation.

Both the second assist torque command value setting unit 52 and the first assist torque command value setting unit 51 set the assist torque command values based on the steering torque $T_{tb}$ detected by the torque sensor 12.

The normal assist control and the cooperative assist control differ from each other in terms of a load against which an assist is to be performed and a steering feel for which an assist is to be performed.

In the normal assist control, an assist is performed on actual load torque (actual road reaction torque $T_{rl}$ etc.). Therefore, the second assist torque command value setting unit 52 sets the second assist torque command value $T_{as2}$ to obtain a steering feel suited to the actual load torque.

In the cooperative assist control, an assist is performed on a virtual reaction force (virtual road reaction torque $T_{rl}$ given by an expression (1) described later) to be used in the manual steering command value generation unit 53. Therefore, the first assist torque command value setting unit 51 sets the first assist torque command value $T_{as1}$ to obtain a steering feel suited to the virtual reaction force. As described later, the virtual reaction force is generated using a spring constant k of a virtual spring and a viscous damping coefficient c of a virtual damper.

In the cooperative steering mode, the actual load torque is compensated for by angle control as described later. Therefore, the driver is hardly aware of it. As described later, a manual steering command value $\theta_{MD,cmd}$ generated by the manual steering command value generation unit 53 is added to the automatic steering command value $\theta_{AD,cmd}$. Therefore, the central angle of the virtual spring becomes the automatic steering command value $\theta_{AD,cmd}$ rather than the neutral steering position. Thus, the steering feel changes also depending on the change in the automatic steering command value $\theta_{AD,cmd}$.

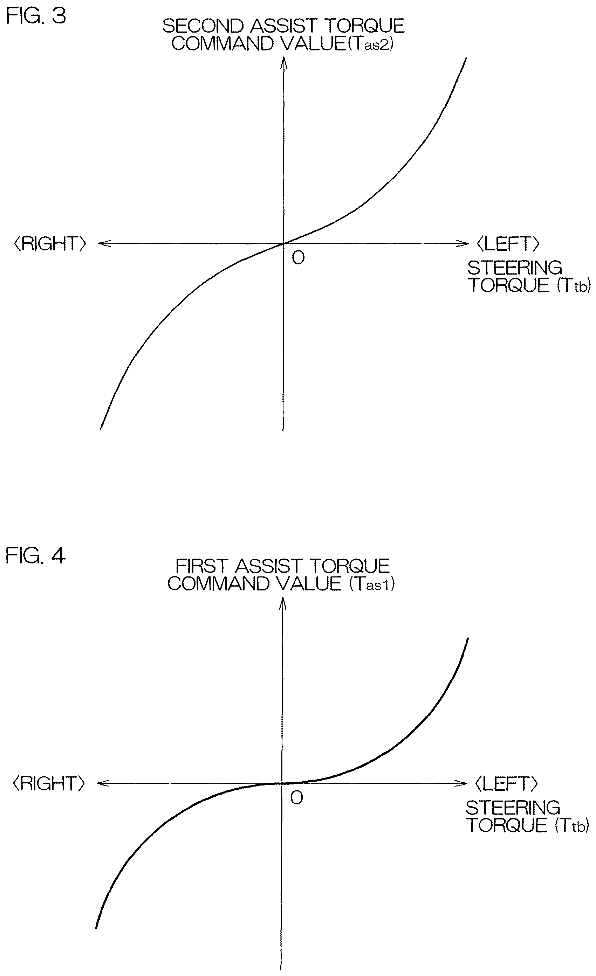

FIG. 3 is a graph showing an example of setting the second assist torque command value $T_{as2}$ with respect to the steering torque $T_{tb}$.

The second assist torque command value $T_{as2}$ is set to a positive value when the electric motor 18 should generate a steering assist force for steering to the left, and is set to a negative value when the electric motor 18 should generate a steering assist force for steering to the right. The second assist torque command value $T_{as2}$ is positive for a positive value of the steering torque $T_{tb}$, and is negative for a negative value of the steering torque $T_{tb}$. The second assist torque command value $T_{as2}$ is set such that its absolute value increases as the absolute value of the steering torque $T_{tb}$ increases.

The second assist torque command value setting unit 52 may calculate the second assist torque command value $T_{as2}$ by multiplying the steering torque $T_{tb}$ by a preset constant. The second assist torque command value $T_{as2}$ may be set in consideration of a vehicle speed.

FIG. 4 is a graph showing an example of setting the first assist torque command value $T_{as1}$ with respect to the steering torque $T_{tb}$.

The first assist torque command value $T_{as1}$ is set to a positive value when the electric motor 18 should generate a steering assist force for steering to the left, and is set to a negative value when the electric motor 18 should generate a steering assist force for steering to the right. The first assist torque command value $T_{as1}$ is positive for a positive value of the steering torque $T_{tb}$, and is negative for a negative value of the steering torque $T_{tb}$. The first assist torque command value $T_{as1}$ is set such that its absolute value increases as the absolute value of the steering torque $T_{tb}$ increases.

The first assist torque command value setting unit 51 may calculate the first assist torque command value $T_{as1}$ by multiplying the steering torque $T_{tb}$ by a preset constant. The first assist torque command value $T_{as1}$ may be set in consideration of the vehicle speed.

In the examples of FIGS. 3 and 4, the characteristics of the first assist torque command value $T_{as1}$ with respect to the steering torque $T_{tb}$ are different from the characteristics of the second assist torque command value $T_{as2}$ with respect to the steering torque $T_{tb}$.

The characteristics of the first assist torque command value $T_{as1}$ with respect to the steering torque $T_{tb}$ may be the same as the characteristics of the second assist torque command value $T_{as2}$ with respect to the steering torque $T_{tb}$.

The second assist torque command value setting unit 52 may also function as the first assist torque command value setting unit 51. In this case, the second assist torque command value $T_{as2}$ is provided to the manual steering command value generation unit 53 in place of the first assist torque command value $T_{as1}$.

The first assist torque command value setting unit 51 may also function as the second assist torque command value setting unit 52. In this case, the first assist torque command value $T_{as1}$ is provided to the subtraction unit 56 and the addition unit 59 in place of the second assist torque command value $T_{as2}$.

The manual steering command value generation unit 53 is provided to, when the driver operates the steering wheel 2, set the steering angle (more exactly, the rotational angle $\theta$ of the output shaft 9) according to the steering wheel operation as the manual steering command value $\theta_{MD,cmd}$. The manual steering command value generation unit 53 generates the manual steering command value $\theta_{MD,cmd}$ using the steering torque $T_{tb}$ detected by the torque sensor 12 and the first assist torque command value $T_{as1}$ set by the first assist torque command value setting unit 51. The manual steering command value generation unit 53 will be described in detail later.

The integrated angle command value calculation unit 54 calculates an integrated angle command value $\theta_{CO,cmd}$ by adding the manual steering command value $\theta_{MD,cmd}$ to the automatic steering command value $\theta_{AD,cmd}$ set by the higher-level ECU 201.

The angle control unit 55 calculates a first integrated motor torque command value $T_{CO1,cmd}$ according to the integrated angle command value $\theta_{CO,cmd}$ based on the integrated angle command value $\theta_{CO,cmd}$. The first integrated motor torque command value $T_{CO1,cmd}$ is an example of the "first integrated torque command value" in the present disclosure. The angle control unit 55 will be described in detail later.

The subtraction unit 56 calculates a second integrated motor torque command value $T_{CO2,cmd}$ ($= T_{CO1,cmd} - T_{as2}$) by subtracting the second assist torque command value $T_{as2}$ from the first integrated motor torque command value $T_{CO1,cmd}$. The second integrated motor torque command value $T_{CO2,cmd}$ is an example of the "second integrated torque command value" in the present disclosure.

The guard processing unit 57 calculates a third integrated motor torque command value $T_{CO3,cmd}$ by performing a guard process on the second integrated motor torque command value $T_{CO2,cmd}$. The third integrated motor torque command value $T_{CO3,cmd}$ is an example of the "third integrated torque command value" in the present disclosure.

In the present embodiment, the guard processing unit 57 performs a first guard process of limiting the second integrated motor torque command value $T_{CO2,cmd}$ such that the absolute value of the second integrated motor torque command value $T_{CO2,cmd}$ is equal to or smaller than a first predetermined value, and a second guard process of limiting the second integrated motor torque command value $T_{CO2,cmd}$ such that the absolute value of the amount of temporal change in the second integrated motor torque command value $T_{CO2,cmd}$ is equal to or smaller than a second predetermined value. The guard processing unit 57 may perform only the first guard process, or may perform only the second guard process.

The guard processing unit 57 is provided to prevent unintended sudden steering due to a malfunction of the system for setting the automatic steering command value $\theta_{AD,cmd}$ or a malfunction of the angle control unit 55. The malfunction of the system for setting the automatic steering command value $\theta_{AD,cmd}$ is erroneous lane recognition, camera failure, etc.

The switch 58 is turned ON and OFF in response to the input mode setting signals S1, S2. Specifically, the switch 58 is OFF when the manual steering mode setting signal S1 is input, that is, when the steering mode is set to the manual steering mode. The switch 58 is ON when the cooperative steering mode setting signal S2 is input, that is, when the steering mode is set to the cooperative steering mode.

When the switch 58 is ON, the addition unit 59 calculates a final motor torque command value $T_{M,cmd}$ ($= T_{as2} + T_{CO3,cmd}$) for the electric motor 18 by adding the second assist torque command value $T_{as2}$ and the third integrated motor torque command value $T_{CO3,cmd}$ after the guard process. The motor torque command value $T_{M,cmd}$ ($= T_{as2} + T_{CO3,cmd}$) in this case is an example of the "fourth integrated torque command value" in the present disclosure.

When the switch 58 is OFF, the addition unit 59 outputs the second assist torque command value $T_{as2}$ as the final motor torque command value $T_{M,cmd}$ ($= T_{as2}$).

The motor torque command value $T_{M,cmd}$ that is the output of the addition unit 59 is provided to the torque control unit 60.

The torque control unit 60 drives the drive circuit 41 such that the motor torque of the electric motor 18 is brought closer to the motor torque command value $T_{M,cmd}$. The torque control unit 60 will be described in detail later.

In the present embodiment, the manual steering command value generation unit 53 uses a reference EPS model to set the manual steering command value $\theta_{MD,cmd}$.

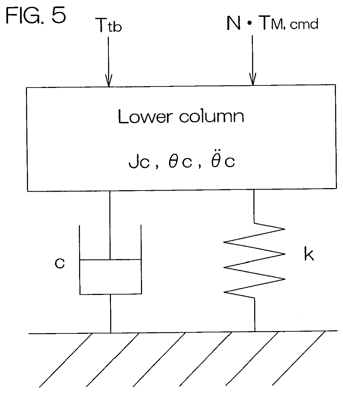

FIG. 5 is a schematic diagram showing an example of the reference EPS model that is used in the manual steering command value generation unit 53.

The reference EPS model is a single inertia model including a lower column. The lower column corresponds to the output shaft 9 and the worm wheel 21. In FIG. 5, $J_c$ is the inertia of the lower column, $\theta_c$ is the rotational angle of the lower column, and $T_{tb}$ is the steering torque. The steering torque $T_{tb}$, torque $N \cdot T_{M,cmd}$ acting on the output shaft 9 from the electric motor 18, and the road reaction torque (virtual reaction force) $T_{rl}$ are applied to the lower column. The road reaction torque

$T_{rl}$ is given by the following expression (1) using the spring constant k of the virtual spring and the viscous damping coefficient c of the virtual damper.

$$T_{rl} = -k \cdot \theta_c - c(d\theta_c/dt) \ ... \ (1)$$

In the present embodiment, the spring constant k and the viscous damping coefficient c are set to predetermined values obtained in advance through experiments, analysis, etc.

An equation of motion of the reference EPS model is given by the following expression (2).

$$J_c \cdot d^2\theta_c/dt^2 = T_{tb} + N \cdot T_{M,cmd} - k \cdot \theta_c - c(d\theta_c/dt) \ ... \ (2)$$

The manual steering command value generation unit 53 calculates the rotational angle $\theta_c$ of the lower column by solving the differential equation represented by the expression (2) by substituting the steering torque $T_{tb}$ detected by the torque sensor 12 for $T_{tb}$ and substituting the first assist torque command value $T_{as1}$ set by the first assist torque command value setting unit 51 for $T_{M,cmd}$. The manual steering command value generation unit 53 generates the obtained rotational angle $\theta_c$ of the lower column as the manual steering command value $\theta_{MD,cmd}$.

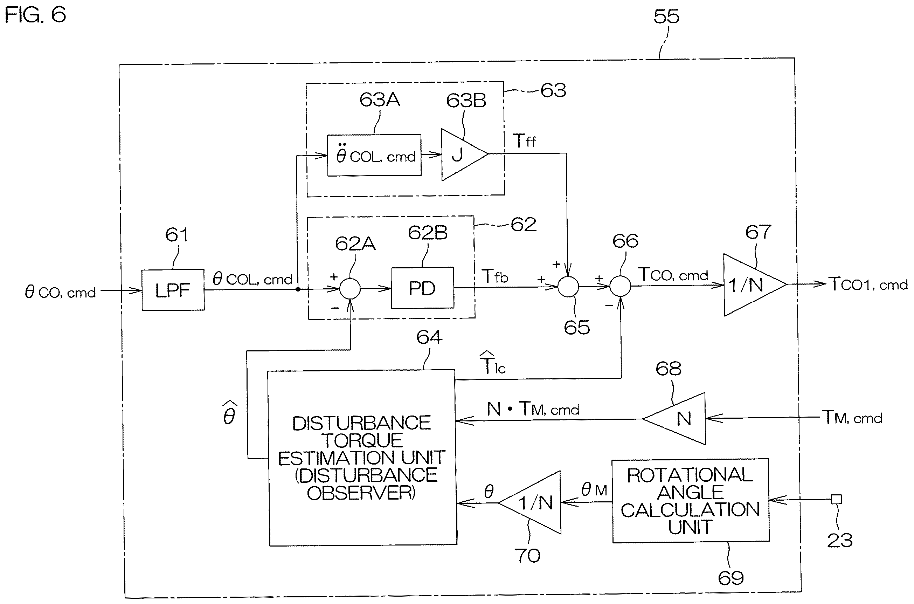

FIG. 6 is a block diagram showing the configuration of the angle control unit 55.

The angle control unit 55 calculates the first integrated motor torque command value $T_{CO1,cmd}$ based on the integrated angle command value $\theta_{CO,cmd}$. The angle control unit 55 includes a low-pass filter (LPF) 61, a feedback control unit 62, a feedforward control unit 63, a disturbance torque estimation unit 64, a torque addition unit 65, a disturbance torque compensation unit 66, a first reduction ratio division unit 67, a reduction ratio multiplication unit 68, a rotational angle calculation unit 69, and a second reduction ratio division unit 70.

The reduction ratio multiplication unit 68 converts the motor torque command value $T_{M,cmd}$ calculated by the addition unit 59 (see FIG. 2) into an output shaft torque command value $N \cdot T_{M,cmd}$ that acts on the output shaft 9 (worm wheel 21) by multiplying the motor torque command value $T_{M,cmd}$ by the reduction ratio N of the speed reducer 19.

The rotational angle calculation unit 69 calculates a rotor rotational angle $\theta_M$ of the electric motor 18 based on an output signal from the rotational angle sensor 23. The second reduction ratio division unit 70 converts the rotor rotational angle $\theta_M$ calculated by the rotational angle calculation unit 69 into a rotational angle (actual steering angle) $\theta$ of the output shaft 9 by dividing the rotor rotational angle $\theta_M$ by the reduction ratio N.

The low-pass filter 61 performs a low-pass filtering process on the integrated angle command value $\theta_{CO,cmd}$. An integrated angle command value $\theta_{COL,cmd}$ after the low-pass filtering process is provided to the feedback control unit 62 and the feedforward control unit 63.

The feedback control unit 62 is provided to bring an estimated steering angle value $^\wedge\theta$ calculated by the disturbance torque estimation unit 64 closer to the integrated angle command value $\theta_{COL,cmd}$ after the low-pass filtering process. The feedback control unit 62 includes an angle deviation calculation unit 62A and a PD control unit 62B. The angle deviation calculation unit 62A calculates a deviation $\Delta\theta$ (= $\theta_{COL,cmd}$ - $^\wedge\theta$) between the integrated angle command value $\theta_{COL,cmd}$ and the estimated steering angle value $^\wedge\theta$. The angle deviation calculation unit 62A may calculate, as the angle deviation $\Delta\theta$, a deviation ($\theta_{COL,cmd}$ - $\theta$) between the integrated angle command value $\theta_{COL,cmd}$ and the actual steering angle $\theta$ calculated by the second reduction ratio division unit 70.

The PD control unit 62B calculates feedback control torque $T_{fb}$ by performing PD calculation (proportional-derivative calculation) for the angle deviation $\Delta\theta$ calculated by the angle deviation calculation unit 62A. The feedback control torque $T_{fb}$ is provided to the torque addition unit 65.

The feedforward control unit 63 is provided to improve control response by compensating for a delay in response due to the inertia of the electric power steering system 1. The feedforward control unit 63 includes an angular acceleration calculation unit 63A and an inertia multiplication unit 63B. The angular acceleration calculation unit 63A calculates a target angular acceleration $d^2\theta_{COL,cmd}/dt^2$ by obtaining the second derivative of the integrated angle command value $\theta_{COL,cmd}$.

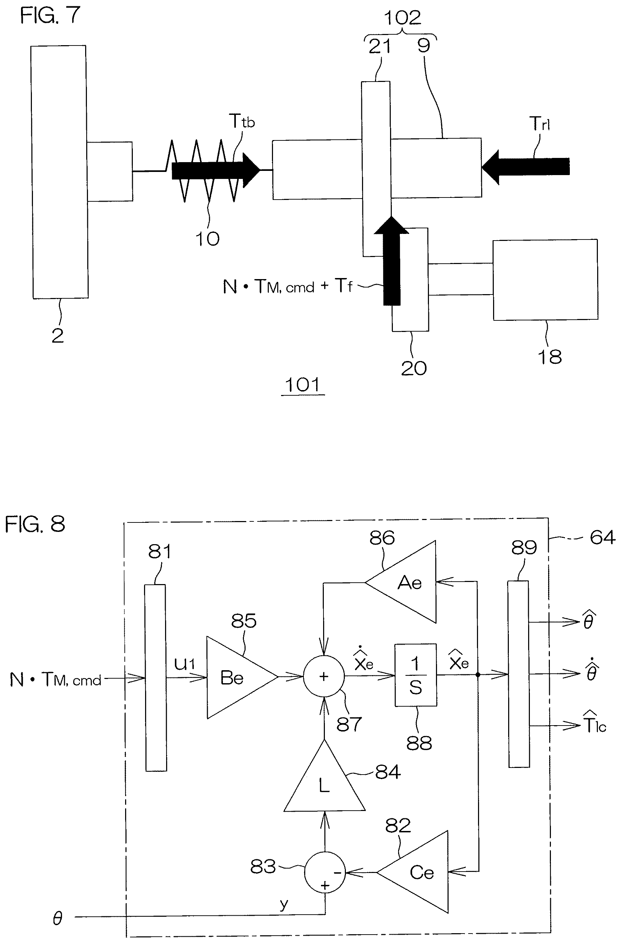

The inertia multiplication unit 63B calculates feedforward control torque $T_{ff}$ (= $J \cdot d^2\theta_{COL,cmd}/dt^2$) by multiplying the target angular acceleration $d^2\theta_{COL,cmd}/dt^2$ calculated by the angular acceleration calculation unit 63A by inertia J of the electric power steering system 1. The inertia J is obtained from, for example, a physical model of the electric power steering system 1 (see FIG. 7) described later. The feedforward control torque $T_{ff}$ is provided to the torque addition unit 65 as an inertia compensation value.

The torque addition unit 65 calculates a basic torque command value ($T_{fb} + T_{ff}$) by adding the feedforward control torque $T_{ff}$ to the feedback control torque $T_{fb}$.

The disturbance torque estimation unit 64 is provided to estimate non-linear torque (disturbance torque: torque other than the motor torque) that is generated as disturbance in a plant (object to be controlled by the electric motor 18). The disturbance torque estimation unit 64 estimates the disturbance torque (disturbance load) $T_{lc}$, the steering angle $\theta$, and a steering angle differential value (angular velocity) $d\theta/dt$ based on the output shaft torque command value $N \cdot T_{M,cmd}$ and the actual steering angle θ. The estimated values of the disturbance torque $T_{lc}$, the steering angle θ, and the steering angle differential value (angular velocity) dθ/dt are represented by $\hat{T}_{lc}$, $\hat{θ}$, and $d\hat{θ}/dt$, respectively. The disturbance torque estimation unit 64 will be described in detail later.

The estimated disturbance torque value $\hat{T}_{lc}$ calculated by the disturbance torque estimation unit 64 is provided to the disturbance torque compensation unit 66 as a disturbance torque compensation value. The estimated steering angle value $\hat{θ}$ calculated by the disturbance torque estimation unit 64 is provided to the angle deviation calculation unit 62A.

The disturbance torque compensation unit 66 calculates an integrated steering torque command value $T_{CO,cmd}$ (= $T_{fb}$ + $T_{ff}$ - $\hat{T}_{lc}$) by subtracting the estimated disturbance torque value $\hat{T}_{lc}$ from the basic torque command value ($T_{fb}$ + $T_{ff}$). The integrated steering torque command value $T_{CO,cmd}$ (torque command value for the output shaft 9) with the disturbance torque compensated for is thus obtained.

The integrated steering torque command value $T_{CO,cmd}$ is provided to the first reduction ratio division unit 67. The first reduction ratio division unit 67 calculates the first integrated motor torque command value $T_{CO1,cmd}$ by dividing the integrated steering torque command value $T_{CO,cmd}$ by the reduction ratio N. The first integrated motor torque command value $T_{CO1,cmd}$ is provided to the subtraction unit 56 (see FIG. 2).

The disturbance torque estimation unit 64 will be described in detail. The disturbance torque estimation unit 64 is a disturbance observer that estimates the disturbance torque $T_{lc}$, the steering angle θ, and the angular velocity dθ/dt using, for example, a physical model 101 of the electric power steering system 1 shown in FIG. 7.

The physical model 101 includes a plant (example of an object to be driven by the motor) 102 that includes the output shaft 9 and the worm wheel 21 fixed to the output shaft 9. The steering torque $T_{tb}$ is applied from the steering wheel 2 to the plant 102 via the torsion bar 10, and the road reaction torque $T_{rl}$ is applied from the steered wheel 3 side to the plant 102.

Moreover, the output shaft torque command value N·$T_{M,cmd}$ is applied to the plant 102 via the worm gear 20, and the friction torque $T_f$ is applied to the plant 102 due to the friction between the worm wheel 21 and the worm gear 20.

An equation of motion for the inertia of the physical model 101 is given by the following expression (3), where J is the inertia of the plant 102.

[Math. 1]

$$J\ddot{θ} = N \cdot T_{M,cmd} + T_{lc} \quad \cdot\cdot\cdot(3)$$
$$T_{lc} = T_{tb} + T_{rl} + T_f$$

$d^2θ/dt^2$ is the angular acceleration of the plant 102. N is the reduction ratio of the speed reducer 19. $T_{lc}$ represents the disturbance torque other than the motor torque that is applied to the plant 102. While the disturbance torque $T_{lc}$ is shown as the sum of the steering torque $T_{tb}$, the road reaction torque $T_{rl}$, and the friction torque $T_f$ in the present embodiment, the disturbance torque $T_{lc}$ actually includes torque other than these.

An equation of state for the physical model 101 in FIG. 7 is given by the following expression (4).

[Math. 2]

$$\begin{cases} \dot{x} = Ax + B_1u_1 + B_2u_2 \\ y = Cx + Du_1 \end{cases} \quad \cdot\cdot\cdot(4)$$

In the above expression (4), x is a state variable vector, $u_1$ is a known input vector, $u_2$ is an unknown input vector, and y is an output vector (measured value). In the above expression (4), A is a system matrix, $B_1$ is a first input matrix, $B_2$ is a second input matrix, C is an output matrix, and D is a direct feedthrough matrix.

The above equation of state is extended to a system including the unknown input vector $u_2$ as one of the states. An equation of state of the extended system (extended equation of state) is given by the following expression (5).

[Math. 3]

$$\begin{cases} \dot{x}_e = A_ex_e + B_eu_1 \\ y = C_ex_e \end{cases} \quad \cdot\cdot\cdot(5)$$

In the above expression (5), $x_e$ is a state variable vector of the extended system, and is given by the following expression (6).

[Math. 4]

$$X_e = \begin{bmatrix} x \\ u2 \end{bmatrix} \quad \cdots (6)$$

In the above expression (5), $A_e$ is a system matrix of the extended system, $B_e$ is a known input matrix of the extended system, and $C_e$ is an output matrix of the extended system.

A disturbance observer (extended state observer) given by the equation of the following expression (7) is constructed from the extended equation of state given by the above expression (5).

[Math. 5]

$$\begin{cases} \dot{\hat{x}}_e = A_e\hat{x}_e + B_e u1 + L(y - \hat{y}) \\ \hat{y} = C_e\hat{x}_e \end{cases} \quad \cdots (7)$$

In the expression (7), $^\wedge x_e$ represents an estimated value of $x_e$. L is an observer gain. $^\wedge y$ represents an estimated value of y. $^\wedge x_e$ is given by the following expression (8).

[Math. 6]

$$\hat{x}_e = \begin{bmatrix} \hat{\theta} \\ \dot{\hat{\theta}} \\ \hat{T}_{lc} \end{bmatrix} \quad \cdots (8)$$

In the expression (8), $^\wedge\theta$ is an estimated value of $\theta$, and $^\wedge T_{lc}$ is an estimated value of $T_{lc}$.

The disturbance torque estimation unit 64 calculates the state variable vector $^\wedge x_e$ based on the equation of the above expression (7).

FIG. 8 is a block diagram showing the configuration of the disturbance torque estimation unit 64.

The disturbance torque estimation unit 64 includes an input vector input unit 81, an output matrix multiplication unit 82, a first addition unit 83, a gain multiplication unit 84, an input matrix multiplication unit 85, a system matrix multiplication unit 86, a second addition unit 87, an integration unit 88, and a state variable vector output unit 89.

The output shaft torque command value $N \cdot T_{M,cmd}$ calculated by the reduction ratio multiplication unit 68 (see FIG. 6) is provided to the input vector input unit 81. The input vector input unit 81 outputs an input vector $u_l$.

The output of the integration unit 88 is the state variable vector $^\wedge x_e$ (see the above expression (8)). At the start of the calculation, an initial value is given as the state variable vector $^\wedge x_e$. The initial value of the state variable vector $^\wedge x_e$ is, for example, 0.

The system matrix multiplication unit 86 multiplies the state variable vector $^\wedge x_e$ by the system matrix $A_e$. The output matrix multiplication unit 82 multiplies the state variable vector $^\wedge x_e$ by the output matrix $C_e$.

The first addition unit 83 subtracts the output ($C_e \cdot {}^\wedge x_e$) of the output matrix multiplication unit 82 from the output vector (measured value) y that is the actual steering angle $\theta$ calculated by the second reduction ratio division unit 70 (see FIG. 6). That is, the first addition unit 83 calculates the difference (y - $^\wedge y$) between the output vector y and the estimated output vector value $^\wedge y$ (= $C_e \cdot {}^\wedge x_e$). The gain multiplication unit 84 multiplies the output (y - $^\wedge y$) of the first addition unit 83 by the observer gain L (see the above expression (7)).

The input matrix multiplication unit 85 multiplies the input vector $u_1$ output from the input vector input unit 81 by the input matrix $B_e$. The second addition unit 87 calculates a differential value $d^\wedge x_e/dt$ of the state variable vector by adding the output ($B_e \cdot u_1$) of the input matrix multiplication unit 85, the output ($A_e \cdot {}^\wedge x_e$) of the system matrix multiplication unit 86, and the output (L(y - $^\wedge y$)) of the gain multiplication unit 84. The integration unit 88 calculates the state variable vector $^\wedge x_e$ by integrating the output ($d^\wedge x_e/dt$) of the second addition unit 87. The state variable vector output unit 89 calculates the estimated disturbance torque value $^\wedge T_{lc}$, the estimated steering angle value $^\wedge\theta$, and the estimated angular velocity value $d^\wedge\theta/dt$ based on the state variable vector $^\wedge x_e$.

Unlike the extended state observer described above, a typical disturbance observer is composed of an inverse model of the plant and a low-pass filter. An equation of motion of the plant is given by the expression (3) as described above. The inverse model of the plant is therefore given by the following expression (9).

[Math. 7]

$$T_{lc} = J\ddot{\theta} - N \cdot T_{M,cmd} \quad \cdots (9)$$

The inputs to the typical disturbance observer are $J \cdot d^2\theta/dt^2$ and $N \cdot T_{M,cmd}$. Since the second derivative of the actual steering angle $\theta$ is used, noise of the rotational angle sensor 23 has a great influence. The extended state observer according to the above embodiment estimates the disturbance torque using an integral type. Therefore, the influence of noise due to differentiation can be reduced.

The typical disturbance observer composed of the inverse model of the plant and the low-pass filter may be used as the disturbance torque estimation unit 64.

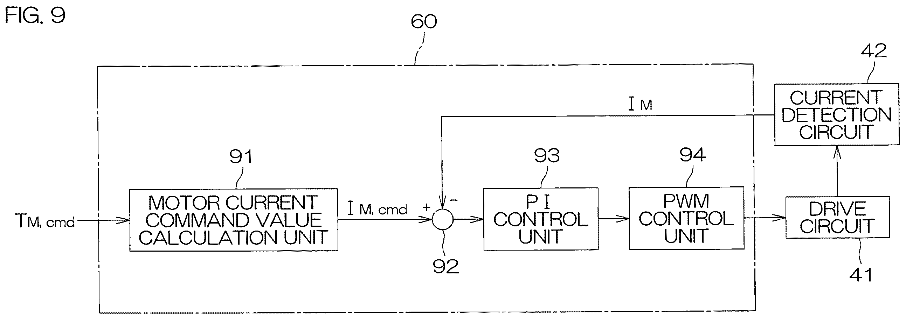

FIG. 9 is a schematic diagram showing the configuration of the torque control unit 60.

The torque control unit 60 (see FIG. 2) includes a motor current command value calculation unit 91, a current deviation calculation unit 92, a PI control unit 93, and a PWM (Pulse Width Modulation) control unit 94.

The motor current command value calculation unit 91 calculates a motor current command value $I_{M,cmd}$ by dividing the motor torque command value $T_{M,cmd}$ calculated by the addition unit 59 (see FIG. 2) by a torque constant $K_t$ of the electric motor 18.

The current deviation calculation unit 92 calculates a deviation $\Delta I$ (= $I_{M,cmd}$ - $I_M$) between the motor current command value $I_{M,cmd}$ obtained by the motor current command value calculation unit 91 and the motor current $I_M$ detected by the current detection circuit 42.

The PI control unit 93 generates a drive command value for controlling the motor current I flowing through the electric motor 18 to the motor current command value $I_{M,cmd}$ by performing PI calculation (proportional-integral calculation) for the current deviation $\Delta I$ calculated by the current deviation calculation unit 92. The PWM control unit 94 generates a PWM control signal with a duty cycle corresponding to the drive command value, and supplies the PWM control signal to the drive circuit 41. Electric power corresponding to the drive command value is thus supplied to the electric motor 18.

The operation of the present embodiment will be described below with reference to FIG. 2.

In the present embodiment, the manual steering mode refers to a steering mode in which the electric motor 18 is controlled based only on the second assist torque command value $T_{as2}$. The cooperative steering mode refers to a steering mode in which the electric motor 18 is controlled based on the integrated angle command value $\theta_{CO,cmd}$ obtained by considering both the automatic steering command value $\theta_{AD,cmd}$ and the manual steering command value $\theta_{MD,cmd}$. In the cooperative steering mode, the second assist torque command value $T_{as2}$ is also involved in the control on the electric motor 18 when the absolute value of the second integrated motor torque command value $T_{CO2,cmd}$ is reduced by the guard processing unit 57.

When the steering mode is set to the cooperative steering mode, the switch 58 is ON. When the steering mode is set to the manual steering mode, the switch 58 is OFF.

That is, the motor control ECU 202 can switch the steering mode between the manual steering mode and the cooperative steering mode by the driver's operation on the mode switches 31, 32.

The switching of the steering mode is performed by the mode switches 31, 32. However, the higher-level ECU 201 may switch the steering mode according to an ON/OFF signal of a driving assistance function or an autonomous driving function, an obstacle(s), a driver's condition, a driver's operation on an accelerator, a brake, etc., and the traveling state of the vehicle. In this case, the higher-level ECU 201 generates a mode setting signal according to the ON/OFF signal of the driving assistance function or the autonomous driving function, the obstacle(s), the driver's condition, the driver's operation on the accelerator, the brake, etc., and the traveling state of the vehicle, and provides the mode setting signal to the motor control ECU 202.

For example, when the lane keeping assist control for keeping the vehicle within its lane is performed, the higher-level ECU 201 may automatically switch the steering mode as follows.

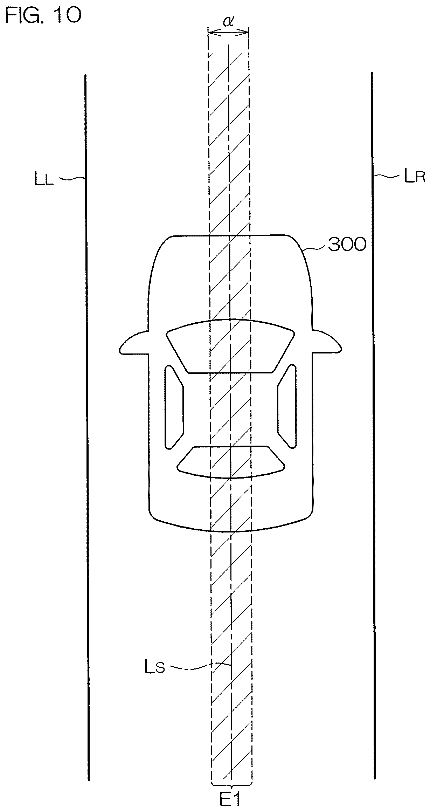

In FIG. 10, the higher-level ECU 201 sets the steering mode to the manual steering mode when a predetermined length position at the lateral center of a vehicle 300 (hereinafter referred to as "reference position") is located within a first region E1 having a width $\alpha$ ($\alpha$ > 0) across a center line $L_S$ between lane markings $L_L$, $L_R$ as viewed in plan.

The higher-level ECU 201 sets the steering mode to the cooperative steering mode when the reference position of the vehicle 300 is located outside the first region E1 as viewed in plan.

In the above embodiment, the steering mode can be switched between the cooperative steering mode in which the electric motor 18 can be controlled based on the integrated angle command value $\theta_{CO,cmd}$ and the manual steering mode in which the electric motor 18 can be controlled based only on the second assist torque command value $T_{as2}$.

That is, in the electric power steering system 1 that can control the electric motor 18 based on the integrated angle command value $\theta_{CO,cmd}$, the electric motor 18 can be controlled based only on the second assist torque command value $T_{as2}$.

In the above embodiment, in the manual steering mode, the electric motor 18 is controlled based only on the second assist torque command value $T_{as2}$. Therefore, the driver can receive the actual road reaction torque.

In the above embodiment, the basic torque command value ($T_{fb}$ + $T_{ff}$) is calculated based on the integrated angle

command value $\theta_{CO,cmd}$, and the basic torque command value $(T_{fb} + T_{ff})$ is corrected by the estimated disturbance torque value $^\wedge T_{lc}$ calculated by the disturbance torque estimation unit 64. Therefore, the influence of disturbance torque on angle control performance can be reduced. As a result, highly accurate angle control can be implemented.

Operation in a case where the steering mode is the cooperative steering mode will be described in detail below.

The subtraction unit 56 calculates the second integrated motor torque command value $T_{CO2,cmd}$ $(T_{CO1,cmd} - T_{as2})$ by subtracting the second assist torque command value $T_{as2}$ from the first integrated motor torque command value $T_{CO1,cmd}$. In other words, the subtraction unit 56 calculates a torque command value component that is mainly according to the automatic steering command value $\theta_{AD,cmd}$ and is obtained by removing the second assist torque command value $T_{as2}$ from the torque command value component according to the integrated angle command value $\theta_{CO,cmd}$ (first integrated motor torque command value $T_{CO1,cmd}$). That is, the second integrated motor torque command value $T_{CO2,cmd}$ is a torque command value component mainly according to the automatic steering command value $\theta_{AD,cmd}$.

The third integrated motor torque command value $T_{CO3,cmd}$ is obtained by performing the guard process on the second integrated motor torque command value $T_{CO2,cmd}$ by the guard processing unit 57.

The final motor torque command value $T_{M,cmd}$ is obtained by adding the second assist torque command value $T_{as2}$ to the third integrated motor torque command value $T_{CO3,cmd}$.

When the absolute value of the second integrated motor torque command value $T_{CO2,cmd}$ is not reduced by the guard processing unit 57 and the second integrated motor torque command value $T_{CO2,cmd}$ is output as is from the guard processing unit 57, the addition unit 59 adds the second assist torque command value $T_{as2}$ to the second integrated motor torque command value $T_{CO2,cmd}$. Therefore, the first integrated motor torque command value $T_{CO1,cmd}$ is the final motor torque command value $T_{M,cmd}$. This case is equivalent to the case where the guard processing unit 57 is not provided. Therefore, the driver can steer the vehicle.

Operation in a case where the absolute value of the second integrated motor torque command value $T_{CO2,cmd}$ is reduced by the guard processing unit 57 will be described. As described above, the second integrated motor torque command value $T_{CO2,cmd}$ is a torque command value component mainly according to the automatic steering command value $\theta_{AD,cmd}$. Therefore, the guard processing unit 57 outputs the third integrated motor torque command value $T_{CO3,cmd}$ that is the torque command value component after the guard process has been performed on the torque command value component mainly according to the automatic steering command value $\theta_{AD,cmd}$.

Then, the addition unit 59 calculates the final motor torque command value $T_{M,cmd}$ by adding the second assist torque command value $T_{as2}$ to the third integrated motor torque command value $T_{CO3,cmd}$. As a result, the final motor torque command value $T_{M,cmd}$ includes the second assist torque command value $T_{as2}$. Thus, the driver can steer the vehicle.

The present embodiment has the following functions and effects compared with a modification described later.

- There is no need to provide a switch for switching the cooperative steering mode and the manual steering mode between the second assist torque command value setting unit 52 and the addition unit 59. That is, the second assist torque command value $T_{as2}$ can be controlled in a constantly ON state.
- The second assist torque command value $T_{as2}$ is added to obtain a steering feel suited to the actual load torque compared with the first assist torque command value $T_{as1}$. Therefore, the driver is aware of the actual load torque.

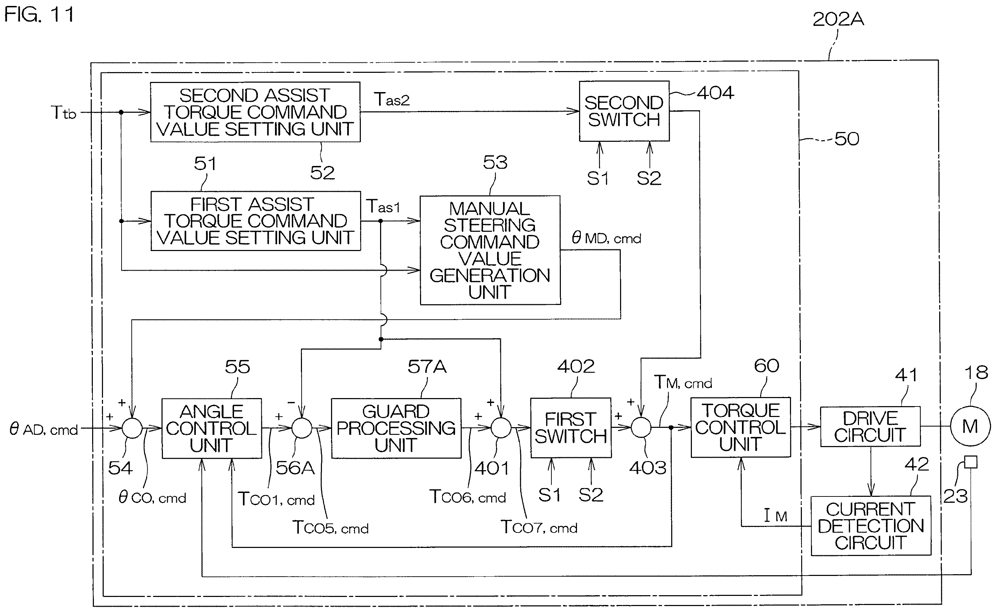

FIG. 11 is a block diagram illustrating a modification of the motor control ECU. In FIG. 11, portions corresponding to those in FIG. 2 described above are represented by the same signs as those in FIG. 2.

The microcomputer 50 in a motor control ECU 202A includes a CPU and a memory, and functions as a plurality of functional processing units by executing a predetermined program. The plurality of functional processing units includes the first assist torque command value setting unit 51, the second assist torque command value setting unit 52, the manual steering command value generation unit 53, the integrated angle command value calculation unit 54, the angle control unit 55, a subtraction unit 56A, a guard processing unit 57A, a first addition unit 401, a first switch 402, a second addition unit 403, a second switch 404, and the torque control unit (current control unit) 60.

The motor control ECU 202A according to the present modification is different from the motor control ECU 202 in FIG. 2 in terms of the following points (1) to (5).

(1) The first addition unit 401 is provided downstream of the guard processing unit 57A.
(2) The first switch 402 is provided downstream of the first addition unit 401.
(3) The second addition unit 403 is provided between the first switch 402 and the torque control unit 60.
(4) The second switch 404 is provided between the second assist torque command value setting unit 52 and the second addition unit 403.
(5) The first assist torque command value $T_{as1}$ is provided to the subtraction unit 56A and the first addition unit 401.

The subtraction unit 56A calculates a fifth integrated motor torque command value $T_{CO5,cmd}$ $(= T_{CO1,cmd} - T_{as1})$ by

subtracting the first assist torque command value $T_{as1}$ from the first integrated motor torque command value $T_{CO1,cmd}$. The fifth integrated motor torque command value $T_{CO5,cmd}$ is an example of the "fifth integrated torque command value" in the present disclosure.

The guard processing unit 57A calculates a sixth integrated motor torque command value $T_{CO6,cmd}$ by performing a guard process on the fifth integrated motor torque command value $T_{CO5,cmd}$. The sixth integrated motor torque command value $T_{CO6,cmd}$ is an example of the "sixth integrated torque command value" in the present disclosure.

In the present embodiment, the guard processing unit 57A performs a third guard process of limiting the fifth integrated motor torque command value $T_{CO5,cmd}$ such that the absolute value of the fifth integrated motor torque command value $T_{CO5,cmd}$ is equal to or smaller than a third predetermined value, and a fourth guard process of limiting the fifth integrated motor torque command value $T_{CO5,cmd}$ such that the absolute value of the amount of temporal change in the fifth integrated motor torque command value $T_{CO5,cmd}$ is equal to or smaller than a fourth predetermined value.

The guard processing unit 57A may perform only the third guard process, or may perform only the fourth guard process.

The first addition unit 401 calculates a seventh integrated motor torque command value $T_{CO7,cmd}$ by adding the first assist torque command value $T_{as1}$ and the sixth integrated motor torque command value $T_{CO6,cmd}$ after the guard process. The seventh integrated motor torque command value $T_{CO7,cmd}$ is an example of the "seventh integrated torque command value" in the present disclosure.

The first switch 402 is turned ON and OFF in response to the input mode setting signals S1, S2. Specifically, the first switch 402 is ON when the cooperative steering mode setting signal S2 is input, that is, when the steering mode is set to the cooperative steering mode. The first switch 402 is OFF when the manual steering mode setting signal S1 is input, that is, when the steering mode is set to the manual steering mode.

The second switch 404 is turned ON and OFF in response to the input mode setting signals S1, S2. Specifically, the second switch 404 is OFF when the cooperative steering mode setting signal S2 is input, that is, when the steering mode is set to the cooperative steering mode. The second switch 404 is ON when the manual steering mode setting signal S1 is input, that is, when the steering mode is set to the manual steering mode.

When the steering mode is set to the manual steering mode, the first switch 402 is OFF and the second switch 404 is ON. In this case, the second addition unit 403 outputs the second assist torque command value $T_{as2}$ as the final motor torque command value $T_{M,cmd}$. Thus, in this case, the electric motor 18 is controlled based only on the second assist torque command value $T_{as2}$ similarly to the motor control ECU 202 in FIG. 2.

When the steering mode is set to the cooperative steering mode, the first switch 402 is ON and the second switch 404 is OFF. In this case, the second addition unit 403 outputs the seventh integrated motor torque command value $T_{CO7,cmd}$ ($= T_{as1} + T_{CO6,cmd}$) calculated by the first addition unit 401 as the final motor torque command value $T_{M,cmd}$.

Operation in a case where the steering mode is the cooperative steering mode will be described in detail below.

The subtraction unit 56A calculates the fifth integrated motor torque command value $T_{CO5,cmd}$ ($T_{CO1,cmd} - T_{as1}$) by subtracting the first assist torque command value $T_{as1}$ from the first integrated motor torque command value $T_{CO1,cmd}$. In other words, the subtraction unit 56A calculates a torque command value component that is according to the automatic steering command value $\theta_{AD,cmd}$ and is obtained by removing the torque command value component according to the manual steering command value $\theta_{MD,cmd}$ (first integrated motor torque command value $T_{CO1,cmd}$) from the torque command value component according to the integrated angle command value $\theta_{CO,cmd}$ (first integrated motor torque command value $T_{CO1,cmd}$). That is, the fifth integrated motor torque command value $T_{CO5,cmd}$ is a torque command value component according to the automatic steering command value $\theta_{AD,cmd}$.

The sixth integrated motor torque command value $T_{CO6,cmd}$ is obtained by performing the guard process on the fifth integrated motor torque command value $T_{CO5,cmd}$ by the guard processing unit 57A.

The seventh integrated motor torque command value $T_{CO7,cmd}$ is obtained by adding the first assist torque command value $T_{as1}$ to the sixth integrated motor torque command value $T_{CO6,cmd}$ by the first addition unit 401.

When the absolute value of the fifth integrated motor torque command value $T_{CO5,cmd}$ is not reduced by the guard processing unit 57A and the fifth integrated motor torque command value $T_{CO5,cmd}$ is output as is from the guard processing unit 57A, the first addition unit 401 adds the first assist torque command value $T_{as1}$ to the fifth integrated motor torque command value $T_{CO5,cmd}$. Therefore, the first integrated motor torque command value $T_{CO1,cmd}$ is the final motor torque command value $T_{M,cmd}$. This case is equivalent to the case where the guard processing unit 57 is not provided. Therefore, the driver can steer the vehicle.

A case where the absolute value of the fifth integrated motor torque command value $T_{CO5,cmd}$ is reduced by the guard processing unit 57A will be described. As described above, the fifth integrated motor torque command value $T_{CO5,cmd}$ is a torque command value component according to the automatic steering command value $\theta_{AD,cmd}$. Therefore, the guard processing unit 57A outputs the sixth integrated motor torque command value $T_{CO6,cmd}$ that is the torque command value component after the guard process has been performed on the torque command value component according to the automatic steering command value $\theta_{AD,cmd}$.

Then, the first addition unit 401 calculates the final motor torque command value $T_{M,cmd}$ by adding the first assist

torque command value $T_{as1}$ to the sixth integrated motor torque command value $T_{CO6,cmd}$. As a result, the final motor torque command value $T_{M,cmd}$ includes the first assist torque command value $T_{as1}$. Thus, the driver can steer the vehicle.

Although the embodiment and modification of the present disclosure are described above, the present disclosure may also be implemented in other forms.

In the above embodiment, the spring constant k in the above expression (2) is obtained in advance through experiments, analysis, etc. However, the spring constant k in the above expression (2) may be calculated based on the following expression (10) using the estimated disturbance torque value $^{\wedge}T_{lc}$ calculated by the disturbance torque estimation unit 64 (see FIG. 6) and the actual steering angle $\theta$ calculated by the second reduction ratio division unit 70.

$$k = {}^{\wedge}T_{lc}/\theta \ ... \ (10)$$

In the above embodiment, the viscous damping coefficient c in the above expression (2) is obtained in advance through experiments, analysis, etc.

However, the viscous damping coefficient c in the above expression (2) may be calculated based on the following expression (11) using the estimated disturbance torque value $^{\wedge}T_{lc}$ calculated by the disturbance torque estimation unit 64 and the actual steering angle $\theta$ calculated by the second reduction ratio division unit 70.

$$c = {}^{\wedge}T_{lc}/(d\theta/dt) \ ... \ (11)$$

In the above embodiment, the angle control unit 55 (see FIG. 6) includes the feedforward control unit 63. However, the feedforward control unit 63 may be omitted. In this case, the feedback control torque $T_{fb}$ calculated by the feedback control unit 62 is basic target torque.

The above embodiment illustrates the example in which the present disclosure is applied to motor control for a column type EPS. However, the present disclosure is also applicable to motor control for an EPS other than the column type. The present disclosure is also applicable to control on an electric motor for steered angle control of a steer-by-wire system.

Although the embodiment of the present disclosure is described in detail above, this is merely a specific example used to clarify the technical content of the present disclosure. The present disclosure should not be construed as being limited to the specific example, and the scope of the present disclosure is limited only by the appended claims.

Description of the Reference Numerals

1 ... electric power steering system, 3 ... steered wheel, 4 ... steering operation mechanism, 18 ... electric motor, 51 ... first assist torque command value setting unit, 52 ... second assist torque command value setting unit, 53 ... manual steering command value generation unit, 54 ... integrated angle command value calculation unit, 55 ... angle control unit, 56, 56A... subtraction unit, 57, 57A ... guard processing unit, 58 ... switch, 59 ... addition unit, 60 ... torque control unit, 61 ... low-pass filter (LPF), 62 ... feedback control unit, 63 ... feedforward control unit, 64 ... disturbance torque estimation unit, 65 ... torque addition unit, 66 ... disturbance torque compensation unit, 401 ... first addition unit, 402 ... first switch, 403 ... second addition unit, 404 ... second switch

**Claims**

1. A motor control device that controls drive of an electric motor for steering angle control, the motor control device comprising:

    a first assist torque command value setting unit that sets a first assist torque command value using steering torque;
    a manual steering command value generation unit that generates a manual steering command value using the steering torque and the first assist torque command value;
    an integrated angle command value calculation unit that calculates an integrated angle command value by adding the manual steering command value to an automatic steering command value;
    a second assist torque command value setting unit that sets a second assist torque command value using the steering torque;
    an angle control unit that calculates a first integrated torque command value according to the integrated angle command value;
    a subtraction unit that calculates a second integrated torque command value by subtracting the second assist torque command value from the first integrated torque command value;
a guard processing unit that calculates a third integrated torque command value by performing a guard process on the second integrated torque command value;
an addition unit that calculates a fourth integrated torque command value by adding the second assist torque command value to the third integrated torque command value; and
a control unit that controls the electric motor based on the fourth integrated torque command value or the second assist torque command value.

2. A motor control device that controls drive of an electric motor for steering angle control, the motor control device comprising:

a first assist torque command value setting unit that sets a first assist torque command value using steering torque;
a manual steering command value generation unit that generates a manual steering command value using the steering torque and the first assist torque command value;
an integrated angle command value calculation unit that calculates an integrated angle command value by adding the manual steering command value to an automatic steering command value;
an angle control unit that calculates a first integrated torque command value according to the integrated angle command value;
a subtraction unit that calculates a fifth integrated torque command value by subtracting the first assist torque command value from the first integrated torque command value;
a guard processing unit that calculates a sixth integrated torque command value by performing a guard process on the fifth integrated torque command value;
an addition unit that calculates a seventh integrated torque command value by adding the first assist torque command value to the sixth integrated torque command value; and
a control unit that controls the electric motor based on the seventh integrated torque command value.

3. The motor control device according to claim 2, further comprising a second assist torque command value setting unit that sets a second assist torque command value using the steering torque, wherein the control unit is configured to control the electric motor based on the seventh integrated torque command value or the second assist torque command value.

4. The motor control device according to claim 1 or 3, wherein a characteristic of the first assist torque command value with respect to the steering torque is different from a characteristic of the second assist torque command value with respect to the steering torque.

5. The motor control device according to claim 1 or 3, wherein a characteristic of the first assist torque command value with respect to the steering torque is the same as a characteristic of the second assist torque command value with respect to the steering torque.

6. The motor control device according to claim 1 or 2, wherein the guard processing unit performs a process of limiting a torque command value to be subjected to the guard process such that an absolute value of the torque command value is equal to or smaller than a first predetermined value, and/or a process of limiting the torque command value to be subjected to the guard process such that an absolute value of an amount of temporal change in the torque command value is equal to or smaller than a second predetermined value.

FIG. 1

FIG. 2

Block diagram showing: SECOND ASSIST TORQUE COMMAND VALUE SETTING UNIT (52), FIRST ASSIST TORQUE COMMAND VALUE SETTING UNIT (51), MANUAL STEERING COMMAND VALUE GENERATION UNIT (53), ANGLE CONTROL UNIT (55), GUARD PROCESSING UNIT (57), SWITCH (58), TORQUE CONTROL UNIT (60), DRIVE CIRCUIT (41), CURRENT DETECTION CIRCUIT (42), M (18). Inputs $T_{tb}$, $\theta_{AD, cmd}$; signals $T_{as2}$, $T_{as1}$, $\theta_{MD, cmd}$, $\theta_{CO, cmd}$, $T_{CO1, cmd}$, $T_{CO2, cmd}$, $T_{CO3, cmd}$, $T_{M, cmd}$, $I_M$, S1, S2. Reference numbers 202, 50, 54, 56, 59, 23.

EP 4 703 240 A1

FIG. 3

SECOND ASSIST TORQUE
COMMAND VALUE(Tas2)

⟨RIGHT⟩

⟨LEFT⟩
STEERING
TORQUE (Ttb)

O

FIG. 4

FIRST ASSIST TORQUE
COMMAND VALUE (Tas1)

⟨RIGHT⟩

⟨LEFT⟩
STEERING
TORQUE (Ttb)

O

FIG. 5

$T_{tb}$          $N \cdot T_{M, cmd}$

Lower column

$J_c$ , $\theta_c$ , $\ddot{\theta}_c$

c          k

FIG. 6

## FIG. 7

## FIG. 8

EP 4 703 240 A1

FIG. 9

FIG. 10

FIG. 11

## INTERNATIONAL SEARCH REPORT

International application No.

**PCT/JP2023/016937**

### A. CLASSIFICATION OF SUBJECT MATTER

***B62D 6/00***(2006.01)i

FI:  B62D6/00

According to International Patent Classification (IPC) or to both national classification and IPC

### B. FIELDS SEARCHED

Minimum documentation searched (classification system followed by classification symbols)

B62D5/04,6/00,15/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2023/286169 A1 (JTEKT CORP.) 19 January 2023 (2023-01-19) | 1-6 |
| A | JP 2017-36025 A (JTEKT CORP.) 16 February 2017 (2017-02-16) | 1-6 |
| A | JP 2015-163498 A (JTEKT CORP.) 10 September 2015 (2015-09-10) | 1-6 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **27 June 2023** | **11 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/016937**

| Patent document cited in search report | | | Publication date (day/month/year) | Patent family member(s) | | | Publication date (day/month/year) |
|---|---|---|---|---|---|---|---|
| WO | 2023/286169 | A1 | 19 January 2023 | (Family: none) | | | |
| JP | 2017-36025 | A | 16 February 2017 | (Family: none) | | | |
| JP | 2015-163498 | A | 10 September 2015 | US | 2014/0343789 | A1 | |
| | | | | EP | 2803557 | A2 | |
| | | | | CN | 104163197 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023286169 A